**Europäisches Patentamt**

**European Patent Office**

**Office européen des brevets**

(19)

(11) Publication number: **0 124 491**
**A 1**

# (12) EUROPEAN PATENT APPLICATION

(21) Application number: **84830089.3**

(22) Date of filing: **26.03.84**

(51) Int. Cl.³: **A 01 C 1/08, A 01 C 7/00**

(30) Priority: **28.04.83 DE 3315447**

(43) Date of publication of application: **07.11.84**
**Bulletin 84/45**

(84) Designated Contracting States: **AT BE CH FR GB LI LU NL SE**

(71) Applicant: **Società "SICMA"-S.p.A., Via Fratelli Lombardi, 5, I-60010 Ostra Vetere (AN) (IT)**

(72) Inventor: **Eck, Franz, Jagerstrasse 2, D-8311 Baierbach (DE)**

(74) Representative: **Baldi, Claudio, Viale della Vittoria 97, I-60035 Jesi (Ancona) (IT)**

(54) Seed drill with a tip-up hopper on a longitudinal, horizontal axis.

(57) The instant invention relates to a seed drill fitted with a tip-up seed hopper which rotates around a horizontal axis in such a way that the seed outlets are always facing upwards during the mixing stage and/or until the actual sowing begins.

The seed drill is characterised by a feedbox with a semi-circular bottom, having a longitudinal raised chamber situated externally to the longitudinal hinge of its lid. Said chamber is as long as the hopper itself and connected to its semi-circular bottom by an inclined plane. The external wall of said raised chamber is provided with equidistant outlets, each with a distribution device and a regulator valve and stop.

EP 0 124 491 A1

ACTORUM AG

– 1 –

Seed drill with a tip-up hopper on a longitudinal, horizontal axis.

This application for Industrial Patent has for its object a seed drill fitted with a tip-up seed hopper which rotates around a horizontal axis in such a way that the seed outlets are always facing upwards during the mixing stage and/or until the actual sowing begins.

The most common types of seed drill usually consist of a hopper or feedbox for the seed on the bottom of which is fitted a distribution device which removes the seed and discharges it through suitable openings into feed pipes, the ends of which are equipped with shares or coulters for making the furrows as seed coverers are also provided.

Furthermore, the hopper is made of galvanised iron plate which is painted and is closed at the top by a tip-up lid.

Provided near the seed outlets are one or two churning devices consisting of longitudinally rotating shafts fitted with radial spokes or pallets.

The distribution devices which may be of the free kind, for example, with buckets or shovels, or of the forced kind, for example, with rollers bearing grooves, teeth or pallets, are placed at regular intervals along the entire length of the hopper, their number depending upon the size of the machine and the spacing of the furrows. At the top of each distributor there is an outlet above which is situated the mouth of the feed pipe ending in the respective coulter.

It often occurs that seed is put into the hopper along with fertilisers, fungicides or other agricultural products which must be evenly mixed with the seed before starting to sow; this mixing action is generally carried out by the aforesaid churners.

The types of seed drills which have been described here inevitably lose a certain amount of the product introduced from the bottom of the hopper, despite being provided with regulator valves and stops which close off each outlet. The finer the added product is, the greater the loss. This gives rise to very serious problems when the added product is in liquid form, in fact it is virtually impossible to carry out the pre-sowing mixing phase in that most of the liquid product drips out through the outlets and is lost.

The fact that the mixing takes place near and above the outlets often leads to an accumulation of the product in the tubes and consequently to a partial blockage or even a complete obstruction of the tubes themselves.

The aim of the herein described invention is to provide a solution to these problems with a seed hopper on a horizontal longitudinal axis so that during the mixing the outlets are facing upwards towards the lid.

These outlets may then move downwards to a position above their respective seed pipes when sowing takes place, following the tipping of the hopper.

The accompanying drawings are for a clearer illustration of the herein described invention wherein:

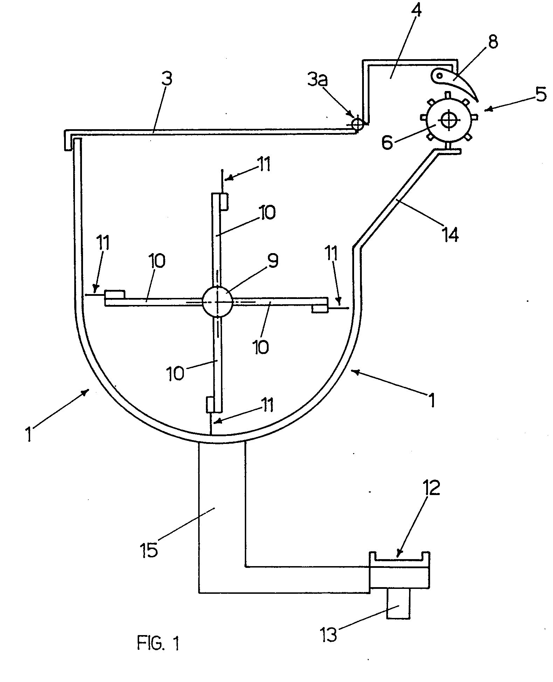

- fig. 1 is a section with a transversal plane corresponding to an outlet of the seed drill hopper in accordance with the instant invention, illustrated schematically during the mixing or discharging phase;

- fig. 2 is a section with a transversal plane corresponding to an outlet of the seed drill hopper in accordance with the instant invention, illustrated schematically during sowing.

With reference to the aforesaid figures the seed drill, in accordance with the instant invention, is characterised by a seed hopper (1) with a semi-circular bottom, closed on top by a tip-up lid (3), hinged along a longitudinal axis (3a).

Near the hinged axis of the lid (3) the feedbox (1) has a raised longi

- 3 -

tudinal chamber (4), as long as the hopper itself, the side of which is provided with equidistant seed outlets (5) each with a distribution device (6) and a regulator valve and stop (8).

The semi-circular bottom of the hopper (1) is connected to the raised chamber (4) by an inclined plane (14) which aids the flow of the product downwards towards the outlets (5) during sowing.

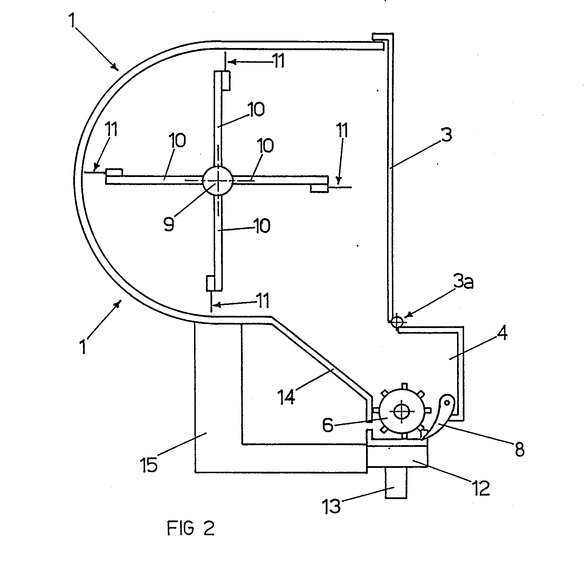

The hopper (1) can be tipped by means of an appropriate control around a longitudinal horizontal shaft (9), so that the outlets (5) can move downwards until they stop exactly above the mouth (12) of the correspon ding feed pipe (13) fixed to the supporting frame (15). (see fig. 2).

The aforesaid longitudinal shaft (9) also acts as a churning device in that it is provided with radial arms (10) fitted with pallets or spatulas (11).

00124491

- 1 -

Claims

1) Seed drill with a tip-up hopper on a longitudinal, horizontal axis, characterised by a feedbox with a semi-circular bottom, having a longitudinal raised chamber situated externally to the longitudinal hinge of its lid. Said chamber is as long as the hopper itself and connected to its semi-circular bottom by an inclined plane. The external wall of said raised chamber is provided with equidistant outlets, each with a distribution device and a regulator valve and stop.

2) Seed drill with tip-up hopper on a longitudinal horizontal axis as claimed in claim 1), characterised by a hopper which may be tipped by means of an appropriate control around a horizontal longitudinal shaft so that the outlets can move downwards until they stop exactly above the mouth of the corresponding feed pipe, fixed to the supporting frame.

3) Seed drill with a tip-up seed hopper on a longitudinal, horizontal axis, characterised by a shaft around which the hopper may be tipped, which acts also as a churning device in that it is provided with radial arms fitted with pallets or spatulas.

1/2

FIG. 1

2/2

FIG 2

00124491

00124491

EUROPEAN SEARCH REPORT

Application number

EP 84 83 0089

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-C- 442 193 (SCHLUMBERGER)<br>* Page 1; figures 1,2 * | 1,2 | A 01 C 1/08<br>A 01 C 7/00 |
| A | DE-A-2 531 473 (OHRTMANN)<br>--- | | |
| A | DE-C- 808 294 (KRAUSS)<br>* Page 2, lines 27-49; figures 1,2 *<br>--- | 1,3 | |
| A | DE-A-3 124 265 (AMAZONEN-WERKE)<br>----- | | |

| | | TECHNICAL FIELDS SEARCHED (Int. Cl. 3) |
|---|---|---|
| | | A 01 C |

The present search report has been drawn up for all claims

European Patent Office

EUROPEAN SEARCH REPORT

| Place of search<br>THE HAGUE | Date of completion of the search<br>08-08-1984 | Examiner<br>VERMANDER R.H. |
|---|---|---|

EPO Form 1508. 03.82